(19) Europäisches Patentamt
European Patent Office
Office européen des brevets

(11) **EP 4 202 830 B1**

(12) **FASCICULE DE BREVET EUROPEEN**

(45) Date de publication et mention
de la délivrance du brevet:
**25.03.2026 Bulletin 2026/13**

(21) Numéro de dépôt: **22213626.9**

(22) Date de dépôt: **14.12.2022**

(51) Classification Internationale des Brevets (IPC):
**G06T 7/215** *(2017.01)* **G06T 7/254** *(2017.01)*

(52) Classification Coopérative des Brevets (CPC):
**G06T 7/215; G06T 7/254;** G06T 2207/10016;
G06T 2207/10024; G06T 2207/30232;
G06T 2207/30236

(54) **PROCÉDÉ DE DÉTECTION DU MOUVEMENT D'AU MOINS UN OBJET, DISPOSITIF ÉLECTRONIQUE, SYSTÈME, PRODUIT PROGRAMME D'ORDINATEUR ET SUPPORT CORRESPONDANTS**

VERFAHREN ZUR ERFASSUNG DER BEWEGUNG MINDESTENS EINES OBJEKTS, ELEKTRONISCHE VORRICHTUNG, SYSTEM, COMPUTERPROGRAMMPRODUKT UND MEDIUM DAFÜR

METHOD FOR DETECTING THE MOVEMENT OF AT LEAST ONE OBJECT, CORRESPONDING ELECTRONIC DEVICE, SYSTEM, COMPUTER PROGRAM PRODUCT AND MEDIUM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.12.2021 FR 2114083**

(43) Date de publication de la demande:
**28.06.2023 Bulletin 2023/26**

(73) Titulaire: **Orange**
**92130 Issy-les-Moulineaux (FR)**

(72) Inventeurs:
• **EXCOFFIER, David**
**92326 Châtillon (FR)**

• **ROUDET, Franck**
**92326 Châtillon (FR)**
• **HOTEL, Olivier**
**92326 Châtillon (FR)**

(56) Documents cités:
**US-A1- 2003 044 045   US-A1- 2015 279 051
US-A1- 2021 133 483   US-B1- 6 240 197**

• **HA J ET AL: "DOCUMENT PAGE DECOMPOSITION USING BOUNDING BOXES OF CONNECTED COMPONENTS OF BLACK PIXELS", DOCUMENT RECOGNITION 2. SAN JOSE, FEB. 6 - 7, 1995; [DOCUMENT RECOGNITION], BELLINGHAM, SPIE, US, vol. 2422, 6 February 1995 (1995-02-06), pages 140 - 151, XP000642546, ISBN: 978-0-8194-1769-5**

**Description**

**1. Domaine technique**

La présente demande se rapporte au domaine de la détection d'objets, comme des objets en mouvement. Il peut s'agir selon les mises en œuvre de la solution décrite dans la présente demande d'objets divers, connectés ou non, comme par exemple des véhicules, des personnes, des animaux, des robots, et/ou des machines.

La présente demande concerne notamment un procédé de détection du mouvement d'au moins un objet, ainsi qu'un dispositif électronique, un système, un produit programme d'ordinateur et un support de stockage correspondants.

**2. État de la technique**

On assiste depuis plusieurs décennies à un essor de l'automatisation dans l'industrie, les transports, et l'agriculture et, plus récemment, au développement des environnements connectés dans la sphère privée ou publique (maison intelligente, bureau intelligent, ville intelligente). Ces automatisations et environnements connectés portent souvent sur des objets, connectés ou non, et requièrent souvent une détection automatique de ces objets (ou tireraient profit d'une telle détection).

Certaines solutions existantes se basent sur des informations remontées par les objets euxmêmes. Cependant, ces solutions sont seulement applicables à des objets connectés et nécessitent en général l'utilisation de ressources de télécommunication et/ou de protocoles particuliers pour recevoir ces informations. De plus, elles sont souvent tributaires de contraintes extérieures, comme une volonté des propriétaires des objets d'activer ces remontées d'information, un niveau de charge des objets, une qualité de transmission réseau etc... D'autres solutions existantes peuvent s'appliquer plus facilement à des objets non connectés. Par exemple, dans le domaine des transports, il existe différentes techniques de comptage de véhicules. Ainsi, certaines techniques d'analyse de trafic routier enregistrent le passage de véhicules grâce à des boucles inductives placées sous la chaussée. Un inconvénient majeur de telles technologies est le coût des structures fixes que nécessitent ces boucles. Ainsi, si elle n'est pas prévue dès la réalisation de la chaussée, l'installation des boucles inductives nécessite de lourds travaux d'aménagement pour intégrer les boucles inductives dans la chaussée et le matériel nécessaire en bordure de route.

Il existe donc un besoin pour une solution de détection d'objets ne présentant pas l'ensemble des inconvénients ci-dessus. Le document US 2003/044045 A1 (Schoepflin et al - « Video object tracking by estimating and subtracting background ») décrit un suivi d'un objet parmi une pluralité de trames d'images. Dans une image initiale, un opérateur sélectionne un objet. L'objet se distingue de la partie d'arrière-plan restante de l'image pour donner un arrière-plan et un premier plan. Un modèle de l'arrière-plan est utilisé et mis à jour dans les images suivantes. Un modèle du premier plan est utilisé et mis à jour dans les images suivantes. Les pixels des images suivantes sont classés comme appartenant à l'arrière-plan ou au premier plan. Dans les images suivantes, des décisions sont prises, notamment : quels pixels n'appartiennent pas à l'arrière-plan ; quels pixels au premier plan doivent être mis à jour ; quels pixels en arrière-plan ont été observés de manière incorrecte dans l'image actuelle ; et quels pixels d'arrière-plan sont observés pour la première fois. De plus, un filtrage de masque est effectué pour corriger les erreurs, éliminer les petits îlots et maintenir la cohérence spatiale et temporelle d'un masque de premier plan.

Le document US 6,240,197 B1 (Christian et al.- « Technique for disambiguating proximate objects within an image ») divulgue une technique permettant de lever l'ambiguïté d'objets proches dans une image. Dans un mode de réalisation, la technique est réalisée en obtenant une image qui est une représentation d'une pluralité de pixels, dans laquelle au moins un groupe de pixels sensiblement adjacents a été identifié dans la pluralité de pixels. Des discontinuités sont identifiées dans chacun des groupes identifiés de pixels sensiblement adjacents. Chacun des groupes identifiés de pixels sensiblement adjacents est divisé en fonction des discontinuités identifiées. Il est ensuite déterminé si chacun des groupes identifiés divisés de pixels sensiblement adjacents correspond à un objet à classer.

Le document US 2021/0133483 A1 (Prabhu et al - « Objet detection based on pixel differences ») concerne la reconnaissance d'objets basée sur l'apprentissage automatique à l'aide d'informations de différence de pixels. Une image de différence générée par soustraction d'une image actuelle à partir d'une ou plusieurs images précédentes peut être fournie, en tant qu'entrée, à un moteur d'apprentissage automatique. L'apprentissage automatique peut produire un objet détecté ou une action détectée sur la base, au moins en partie, de l'image de différence. De cette manière, des informations temporelles sur l'objet peuvent être fournies et utilisées par un modèle d'apprentissage automatique structuré pour accepter l'entrée d'image.

Le document US 2015/0279051 A1 (Kovesi et al. - « Image detection and processing for building control ») divulgue une détection d'occupation pour le contrôle environnemental d'un bâtiment. Un appareil comprend au moins un capteur d'image et un contrôleur, le contrôleur étant opérationnel pour :obtenir une pluralité d'images à partir du capteur d'image, déterminer une image de différence de couleur correspondant à une différence de couleur entre des images consécutives, déterminer des zones de l'image de différence de couleur dans lesquelles la différence de couleur est supérieure à un seuil, calculer une zone de changement total en tant que zone d'agrégation des zones déterminées, créer une liste de candidats d'occupation en filtrant les zones déterminées si la zone de changement totale est inférieure à un seuil de changement de lumière, dans lequel chaque candidat d'occupation est représenté par un composant connecté, suivre le ou les candidats d'occupation sur une période de temps, et détecter l'occupation s'il est détecté qu'un ou plusieurs des candidats à l'occupation se sont déplacés au-delà d'un seuil de mouvement sur la période de temps.

Cependant, il existe un besoin pour une solution de mise en œuvre simple, ne nécessitant pas la mise en place de lourdes infrastructures physiques (mécanique ou de télécommunication) et plus économe en termes de consommation de ressources numériques. La présente demande a pour objet de proposer des améliorations à au moins certains des inconvénients de l'état de la technique.

## 3. Exposé de l'invention

La présente demande vise à améliorer la situation à l'aide d'un procédé mis en œuvre au moins partiellement dans un dispositif électronique.

Un procédé de détection de mouvement selon la revendication 1 est divulgué.

Dans certains modes de réalisation, la valeur d'une portion de la carte de mouvements obtenue tient compte d'une variation d'au moins une composante R, G, B, entre au moins deux desdites images obtenues, pour une zone desdites images obtenues correspondant à ladite portion de la carte de mouvements.

Dans certains modes de réalisation, la valeur d'une portion de la carte de mouvement obtenue tient compte d'une variation de chaque composante R, G, B entre au moins deux desdites images obtenues, pour une zone desdites images obtenues correspondant à ladite portion de la carte de mouvements.

Dans certains modes de réalisation, la valeur d'une portion de ladite première carte de mouvements est une valeur binaire tenant compte des différences entre les valeurs de chaque canal vidéo pour ladite zone desdites images.

Dans certains modes de réalisation, ladite valeur d'une portion de ladite première carte de mouvements tient compte du maximum des différences de chaque canal vidéo pour ladite zone desdites images.

Dans certains modes de réalisation, le procédé comprend une obtention d'une carte de mouvements pour chaque canal vidéo desdites images, la carte de mouvements d'un canal vidéo desdites images étant découpée en portions représentatives des différences pour une zone d'au moins deux desdites images, pour le canal vidéo associé à ladite carte de mouvement, et ladite première carte de mouvement est la carte de mouvement, parmi les cartes de mouvements associées à chacun des canaux vidéo desdites images, qui comporte le plus de portions dont la valeur binaire est représentative d'une différence pour une zone desdites images, pour le canal vidéo associé.

Dans certains modes de réalisation, ladite forme géométrique est une forme rectangulaire.

Dans certains modes de réalisation, le procédé comprend, préalablement au découpage de ladite première carte de mouvements, une rotation de ladite première carte de mouvements. Dans certains modes de réalisation, la carte de mouvement est une carte binaire dont les dimensions correspondent à celles des images du flux vidéo.

Dans certains modes de réalisation, ledit procédé est mis en œuvre de façon itérative sur des images successives du flux vidéo et comprend :

- une obtention d'une première carte de mouvement et d'une seconde carte de mouvements précédant temporellement ladite première carte de mouvements,
- une association conditionnelle d'au moins une première forme géométrique englobante obtenue pour la première carte de mouvements avec au moins une seconde forme géométrique englobante obtenue pour ladite seconde carte de mouvements, ladite association tenant compte des positions relatives desdites premières et secondes formes englobante sur lesdites première et seconde carte de mouvement.

Dans certains modes de réalisation, ladite association tient compte d'une distance entre les centroïdes des première et seconde formes géométriques englobante obtenues.

Dans certains modes de réalisation, la seconde forme géométrique est la forme géométrique englobante de ladite seconde carte de mouvement la plus proche spatialement de ladite première forme géométrique englobante.

Dans certains modes de réalisation, ladite association est mise en œuvre lorsque ladite distance entre les centroïdes des première et seconde formes géométriques englobantes obtenues est inférieure à une première distance.

Dans certains modes de réalisation, le procédé comprend une attribution d'un même identifiant d'objet auxdites première et seconde forme géométrique associées.

Dans certains modes de réalisation, le procédé comprend une attribution d'un type d'objet à au moins une forme géométrique englobante, ladite attribution tenant compte d'une taille, d'une largeur et/ou d'une longueur de ladite forme géométrique englobante (par exemple d'un ratio entre la largeur et/ou la longueur de la forme géométrique englobante).

Dans au moins un mode de réalisation, le procédé comprend un comptage des formes géométriques englobantes d'au moins une carte de mouvements, ledit comptage tenant compte d'une proximité avec au moins une partie dite d'intérêt de ladite carte de mouvements.

Dans certains modes de réalisation, ledit comptage des formes géométriques englobantes tient compte d'une direction de déplacement d'un objet correspondant à plusieurs formes géométriques englobantes associées entre elles, de plusieurs cartes de mouvements, entre lesdites cartes de mouvements.

Dans au moins un mode de réalisation, le procédé comprend :

- une obtention d'un troisième histogramme comptabilisant le nombre de portions en mouvement par colonne dans au moins une troisième desdites formes englobantes obtenues ;
- une obtention d'un quatrième histogramme comptabilisant le nombre de portions en mouvement par rangée dans ladite troisième forme englobante obtenue;
- une obtention d'au moins une quatrième forme géométrique englobante correspondant à l'intersection dans la carte de mouvement des colonnes comprenant au moins un élément non nul du troisième histogramme et des rangées comprenant au moins un élément non nul du quatrième histogramme.

Dans certains modes de réalisation, lesdites obtentions desdits troisième et quatrième histogrammes sont mises en œuvre successivement sur au moins une forme géométrique englobante précédemment obtenue de la carte de mouvements.

Les caractéristiques, présentées isolément dans la présente demande en lien avec certains modes de réalisation du procédé de la présente demande peuvent être combinées entre elles selon d'autres modes de réalisation du présent procédé.

Selon un autre aspect, la présente demande concerne également un dispositif électronique selon la revendication 2.

La présente demande concerne aussi un programme d'ordinateur selon la revendication 13.

La présente demande concerne aussi un support d'enregistrement lisible par un processeur d'un dispositif électronique selon la revendication 14.

Les programmes mentionnés ci-dessus peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Les supports d'informations mentionnés ci-dessus peuvent être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique.

Un tel moyen de stockage peut par exemple être un disque dur, une mémoire flash, etc.

D'autre part, un support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, un support d'informations peut être un circuit intégré dans lequel un programme est incorporé, le circuit étant adapté pour exécuter ou pour être utilisé dans l'exécution de l'un quelconque des modes de réalisation du procédé objet de la présente demande de brevet.

## 4. Brève description des dessins

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :

La [Fig 1] présente une vue simplifiée d'un système, cité à titre d'exemple, dans lequel au moins certains modes de réalisation du procédé de la présente demande peuvent être implémentés,

La [Fig 2] présente une vue simplifiée d'un dispositif adapté à mettre en œuvre au moins certains modes de réalisation du procédé de la présente demande,

La [Fig 3] présente un aperçu du procédé de la présente demande, dans certains de ses modes de réalisation

La [Fig 4] présente un exemple d'obtention d'une carte de mouvements, dans certains modes de réalisation du procédé de la présente demande.

La [Fig 5] présente un exemple d'obtention d'histogrammes à partir d'une partie de carte de mouvements, dans certains modes de réalisation du procédé de la présente demande.

La [Fig 6] présente un exemple d'obtention de formes géométriques englobantes à partir des histogrammes de la figure 5, dans certains modes de réalisation du procédé de la présente demande.

La [Fig 7] présente un exemple d'obtention d'une nouvelle forme géométrique englobante à partir d'histogrammes relatifs à une des formes géométriques englobantes de la figure 5, dans certains modes de réalisation du procédé de la présente demande.

La [Fig 8] présente un exemple de formes géométriques englobantes obtenues à partir de la partie de carte de mouvements de la figure 5, en fin de segmentation, selon certains modes de réalisation du procédé de la présente demande.

La [Fig 9] présente un exemple d'obtention d'une forme géométrique englobante à partir de la carte de mouvements de la figure 4, dans certains de modes de réalisation du procédé de la présente demande.

La [Fig 10] présente un exemple de ligne d'intérêt d'une carte de mouvements, selon certains modes de réalisation du procédé de la présente demande.

La [Fig 11] présente un exemple d'application au comptage de piétons du procédé de la présente demande, dans certains de ses modes de réalisation.

## 5. Description des modes de réalisation

La présente demande propose une solution se basant sur une analyse d'un flux vidéo représentant une scène (ou zone) à surveiller, pour détecter des objets en mouvements dans cette scène. Un mouvement au sein de la scène surveillée se traduira par des différences entre des images successives du flux vidéo.

Les différences entre plusieurs images successives du flux permettent d'obtenir une carte représentative des mouvements survenus dans la scène surveillée entre ces images. Cette carte est aussi appelée dans la présente demande « carte de mouvements ».

La carte de mouvements est découpée en portions indiquant la présence ou l'absence de mouvement, entre ces images, sur des zones de la scène. Dans certains modes de réalisation, le procédé de la présente demande peut mettre en œuvre un regroupement de portions associées à des zones en mouvement (aussi appelées portions de mouvement par simplification) et leur association à des objets ainsi, qu'optionnellement, un suivi de ces objets au fil des cartes de mouvements. Il peut être possible par exemple de compter ces objets, de les identifier, ou de générer des statistiques relatives à ces objets.

Dans les exemples détaillés ci-après, la scène à surveiller une scène d'autoroute, sur laquelle circulent des véhicules en mouvement (voiture, camion, moto...). Il est clair cependant que certains modes de réalisation du procédé objet de la présente demande peuvent être mis en œuvre dans d'autres environnements (notamment pour d'autres types de scènes à surveiller (par exemple un atelier d'usine, un centre commercial, une pièce d'habitation, une rue commerçante, un point de passage d'animaux etc..) pour la détection d'objets divers (robots, véhicules, piétons, animaux, etc.)

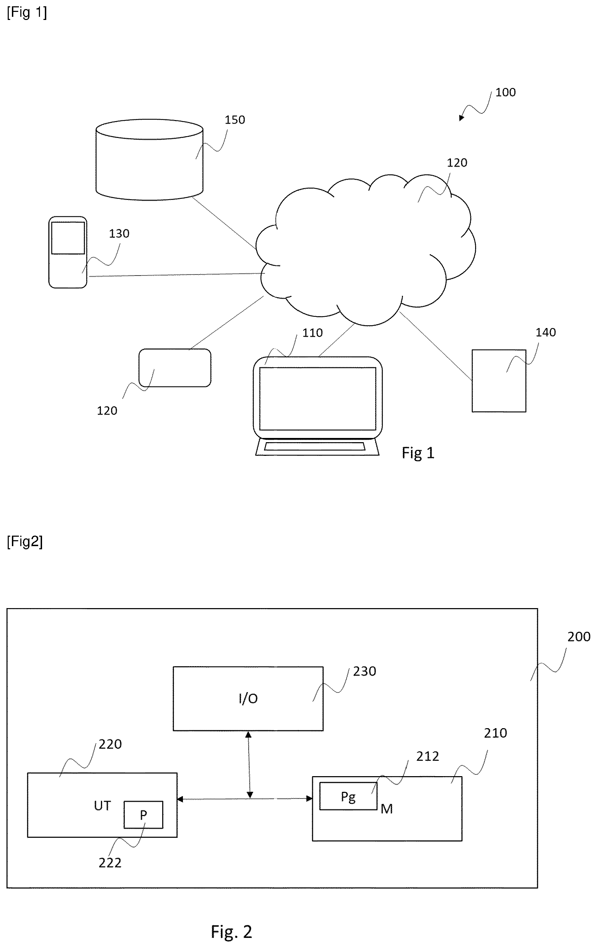

On décrit à présent, en lien avec la figure 1, de façon plus détaillée la présente demande.

La figure 1 représente un système de télécommunication 100 dans lequel le procédé de la présente demande peut être mis en œuvre, dans au moins certains de ses modes de réalisation. Le système 100 comporte un ou plusieurs dispositifs électroniques, certains au moins pouvant communiquer entre eux via un ou plusieurs réseaux de communication 120, éventuellement interconnectés, comme un réseau local ou LAN (Local Area Network) et/ou un réseau de type étendu, ou WAN (Wide Area Network). Par exemple, le réseau peut comprendre un réseau LAN d'entreprise ou domestique et/ou un réseau WAN de type internet, ou cellulaire, GSM - Global System for Mobile Communications, UMTS - Universal Mobile Telecommunications System, Wifi - Wireless, etc.) .

Comme illustré en figure 1, le système 100 peut également comprendre plusieurs dispositifs électroniques, comme un terminal de communication (tel qu'un ordinateur 110, par exemple portable, un smartphone 120, une tablette 130), et/ou un serveur 140, par exemple un serveur adapté à traiter (analyser par exemple) des données obtenues via au moins un des dispositifs électroniques du système 1, un dispositif de stockage 150 par exemple un dispositif de stockage adapté à traiter (analyser par exemple) des données obtenues via au moins un des dispositifs électroniques du système 1. Le système peut également comprendre des éléments de gestion et/ou d'interconnexion réseau (non représentés) .

La figure 2 illustre une structure simplifiée d'un dispositif électronique 200 du système 100, par exemple le dispositif 110, 130 ou 140 de la figure 1, adapté à mettre en œuvre les principes de la présente demande. Selon les modes de réalisation, il peut s'agir d'un serveur, et/ou d'un terminal.

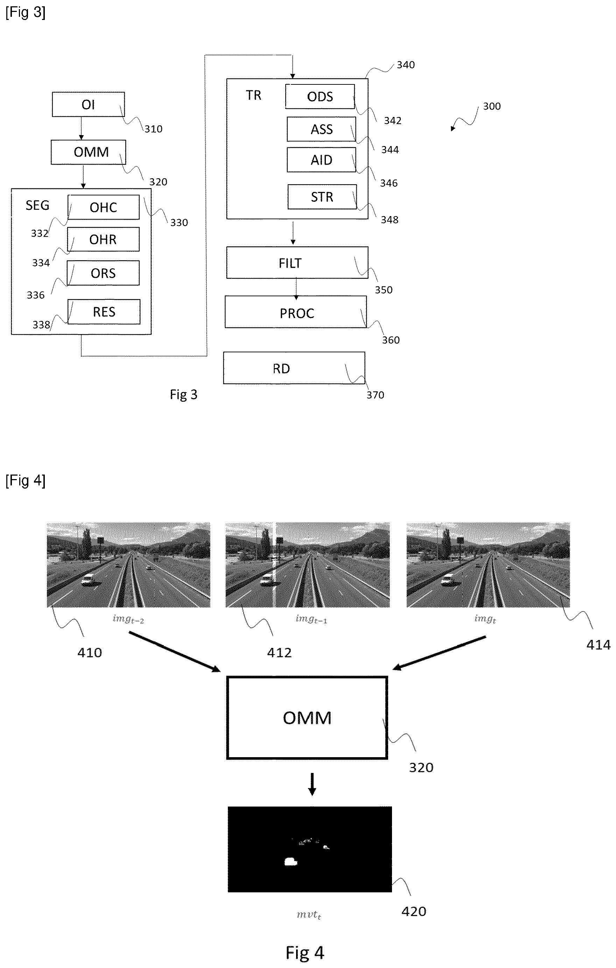

Le dispositif 200 comprend notamment au moins une mémoire M 210. Le dispositif 200 peut notamment comprendre une mémoire tampon, une mémoire volatile, par exemple de type RAM (pour « Random Access Memory » selon la terminologie anglaise), et/ou une mémoire non volatile (par exemple de type ROM (pour « Read Only Memory » selon la terminologie anglaise). Le dispositif 200 peut également comprendre une unité de traitement UT 220, équipée par exemple d'au moins un processeur P 222, et pilotée par un programme d'ordinateur PG 212 stocké en mémoire M 210. A l'initialisation, les instructions de code du programme d'ordinateur PG sont par exemple chargées dans une mémoire RAM avant d'être exécutées par le processeur P. Ledit au moins un processeur P 222 de l'unité de traitement UT 220 peut notamment mettre en œuvre, individuellement ou collectivement, l'un quelconque de modes de réalisation du procédé de la présente demande (décrit notamment en relation avec la figure 3), selon les instructions du programme d'ordinateur PG.

Le dispositif peut également comporter, ou être couplé à, au moins un module d'entrée/ sortie I/O 230, tel qu'un module de communication, permettant par exemple au dispositif 200 de communiquer avec d'autres dispositifs du système 100, via des interfaces de communication filaires ou sans fils, et/ou tel qu'un module d'acquisition permettant au dispositif d'obtenir (par exemple acquérir) des données représentatives d'un environnement à surveiller, et/ou tel qu'un module d'interfaçage avec un utilisateur du dispositif (aussi appelé plus simplement dans cette demande « interface utilisateur ».

Par interface utilisateur du dispositif, on entend par exemple une interface intégrée au dispositif 200, ou une partie d'un dispositif tiers couplé à ce dispositif par des moyens de communication filaires ou sans fils. Par exemple, il peut s'agir d'un écran secondaire du dispositif ou d'un ensemble de hauts parleurs connectés par une technologie sans fils au dispositif Une interface utilisateur peut notamment être une interface utilisateur, dite «de sortie», adaptée à un rendu (ou au contrôle d'un rendu) d'un élément de sortie d'une application informatique utilisée par le dispositif 200, par exemple une application s'exécutant au moins partiellement sur le dispositif 200 ou une application « en ligne » s'exécutant au moins partiellement à distance, par exemple sur le serveur 140 du système 100. Des exemples d'interface utilisateur de sortie du dispositif incluent un ou plusieurs écrans, notamment au moins un écran graphique (tactile par exemple), un ou plusieurs haut-parleurs, un casque connecté. L'interface du dispositif 200 peut par exemple être adaptée au rendu des images illustrées par l'une des figures 4, 9 à 11. Par rendu, on entend ici une restitution (ou « output » selon la terminologie anglaise) sur au moins une interface utilisateur, sous une forme quelconque, par exemple comprenant des composantes textuelle, audio et/ou vidéo, ou une combinaison de telles composantes.

Par ailleurs, une interface utilisateur peut être une interface utilisateur, dite «d'entrée», adaptée à une acquisition d'une commande d'un utilisateur du dispositif 200. Il peut s'agir notamment d'une action à effectuer en lien avec un item restitué, et/ou d'une commande à transmettre à une application informatique utilisée par le dispositif 200, par exemple une application s'exécutant au moins partiellement sur le dispositif 200 ou une application « en ligne » s'exécutant au moins partiellement à distance, par exemple sur le serveur 140 du système 100. Des exemples d'interface utilisateur d'entrée du dispositif 200 incluent un capteur ou plusieurs capteurs, un moyen d'acquisition audio et/ou vidéo (microphone, caméra (webcam) par exemple), un clavier, une souris.

Comme indiqué ci-dessus, le dispositif peut comprendre ou être couplé (via ses moyens de communication) à au moins un module d'acquisition, comme un capteur (matériel et/ou logiciel) couplé au dit dispositif, telle qu'une caméra vidéo, permettant d'acquérir un flux vidéo représentatif de la scène à surveiller. Selon les modes de réalisation (et les applications) du procédé de la présente demande, différentes caméra vidéo peuvent être utilisées pour la captation de la scène : par exemple il peut s'agir d'une caméra vidéo à large angle de vue ou à angle de vue plus limité, une caméra USB ou IP (connectée par exemple au module d'entrées-sorties I/O 230 du dispositif 200).

Le dispositif peut également comprendre ou être couplé à d'autres types de capteurs, capables par exemple de rendre compte d'un environnement physique à surveiller et/ou de la situation d'un module de captation (par exemple une position et/ ou une orientation d'une caméra surveillant la scène).

Les informations acquises via les modules d'acquisition et d'entrées/sortie peuvent par exemple être transmises au module 210 de traitement.

Par exemple, ledit au moins un processeur du dispositif 200 peut notamment être adapté pour :

- une obtention d'au moins deux images espacées temporellement et capturant une même scène d'un flux vidéo ;
- une obtention d'au moins une carte de mouvements représentative des différences entre les composantes, selon au moins un canal vidéo, desdites images ;
- une obtention d'au moins une forme géométrique englobant un ensemble de portions en mouvement de ladite carte de mouvements.

Par exemple, ledit au moins un processeur du dispositif 200 peut notamment être adapté pour :

- une obtention d'au moins deux images espacées temporellement et capturant une même scène d'un flux vidéo ;
- une obtention d'au moins une première carte de mouvements découpée en portions représentative des différences entre les valeurs d'au moins deux canaux vidéo, pour une zone d'au moins deux desdites images ;
- une obtention d'au moins une forme géométrique englobant un ensemble de portions en mouvement de ladite première carte de mouvements.

Certains des modules d'entrée -sorties ci-dessus sont optionnels et peuvent donc être absents du dispositif 200 dans certains modes de réalisation. Notamment, si la présente demande est parfois détaillée en lien avec un dispositif communiquant avec au moins un second dispositif du système 100, le procédé peut également être mis en œuvre localement par le dispositif 200, sans nécessiter d'échanges avec un autre dispositif, dans certains modes de réalisation. Par exemple, dans certains modes de réalisation, le dispositif peut utiliser des informations acquises par une caméra interne au dispositif et fonctionnant en continu, et restituer en temps réel des données résultant du traitement de ces informations sur un écran local au dispositif (par exemple une alerte sur une congestion du trafic sur un point de passage, constituant la scène à surveiller, d'un axe routier où est installé le dispositif).

Ainsi, au moins certains des modes de réalisation du procédé de la présente demande proposent une solution qui peut aider à analyser localement un flux de véhicules, sans nécessiter d'envoi d'un flux vidéo (capturant des images du flux de véhicules) à un serveur distant ou dans le cloud.

Dans certains de ses modes de réalisation, au contraire, le procédé peut être mis en œuvre de façon distribuée entre au moins deux dispositifs 110, 120, 130, et/ou 150 du système 100. Par exemple le dispositif 200 peut être installé dans un poste de contrôle centralisé et obtenir, via un module de communication du dispositif, des informations acquises par une ou plusieurs caméras installées sur des points de passages à surveiller d'un axe routier et appartenant à un même réseau local que le dispositif 200.

Par le terme « module » ou le terme « composant » ou « élément » du dispositif, on entend ici un élément matériel, notamment câblé, ou un élément logiciel, ou une combinaison d'au moins un élément matériel et d'au moins un élément logiciel. Le procédé selon l'invention peut donc être mis en œuvre de diverses manières, notamment sous forme câblée et/ou sous forme logicielle.

La figure 3 illustre certains modes de réalisation du procédé 300 de la présente demande. Le procédé 300 peut par exemple être implémenté par le dispositif électronique 200 illustré en figure 2.

Comme illustré en figure 3, le procédé 300 peut comprendre une obtention 310 d'une pluralité N d'images successives d'un flux vidéo capturant une scène à surveiller (ie capturant des images de la scène) (avec N : entier supérieur ou égal à 2 par exemple de valeur 2, 3 ou 5).

Il peut par exemple s'agir des N images les plus récentes d'un flux vidéo en cours d'acquisition. Par obtention d'un élément, on entend dans la présente demande par exemple une réception de cet élément depuis un réseau de communication, une acquisition de cet élément (via par exemple des éléments d'interface utilisateurs ou des capteurs), une création de cet élément par divers moyens de traitement tels que par copie, encodage, décodage, transformation etc. et/ou un accès à cet élément depuis un support de stockage local ou distant accessible au dispositif mettant en œuvre cette obtention.

L'obtention 310 des images peut par exemple comprendre une réception sur une interface de communication du dispositif d'au moins une portion du flux vidéo et/ou un accès en lecture à une zone de stockage, local ou distante, d'au moins une portion du flux vidéo (par exemple une base de données comme illustré par l'élément 150 de la figure 1), ou encore un accès en lecture à une mémoire tampon accédée en écriture par au moins une caméra surveillant la scène.

Dans certains modes de réalisation, le flux vidéo peut être acquis par une unique caméra, dans une position, une orientation et/ou un angle de prise de vue inchangé tout au long de l'acquisition.

Chacune des N images peut avoir plusieurs composantes, par exemple trois composantes R, G, et B, correspondant aux canaux vidéo (rouge, vert, bleu) (ou red, green, blue (RGB) selon la terminologie anglaise).

Dans la suite de ce document, on note respectivement $img_t$, $img_{t-1}$ et $img_{t-2}$ l'image à un instant t, par exemple l'instant courant du flux vidéo et les deux images précédentes.

On désigne de plus respectivement :

- par $img_t(R)$, $img_t(V)$ et $img_t(B)$ les composantes rouge, verte et bleue de l'image $img_t$,
- par $img_{t-1}(R)$, $img_{t-1}(V)$ et $img_{t-1}(B)$ les composantes rouge, verte et bleue de l'image $img_t$-1 et
- par $img_{t-2}(R)$, $img_{t-2}(V)$ et $img_{t-2}(B)$ les composantes rouge, verte et bleue de l'image $img_{t-2}$.

De façon optionnelle, l'obtention 310 d'une image peut en outre comprendre une obtention de données complémentaires (ou métadonnées) associées à cette image, comme une date et/ou heure de prise de vue, un identifiant de la caméra ayant acquis l'image, un identifiant de l'image dans le flux vidéo acquis, des informations relatives au positionnement et/ou à la prise de vue d'une caméra ayant acquis au moins une portion du flux vidéo, etc.

Comme illustré en figure 3 ainsi qu'en figure 4, le procédé peut également comprendre une obtention (par exemple une génération) 320 d'une carte (dite de mouvements) représentative des mouvements survenus dans la scène surveillée entre les N images obtenues. On note $mvt_t$ la carte de mouvements obtenue à partir de l'image $img_t$, et des N-1 images précédentes. La figure 4 illustre un exemple de carte de mouvements 420 obtenue 320 à partir de 3 images obtenues successives $img_{t-2}$ 410, $img_{t-1}$ 412 et $img_t$ 414, (les trois images plus récentes du flux vidéo par exemple). Dans l'exemple illustré, une portion de la carte de mouvements 420 correspond à un pixel des images obtenues.

Dans certains modes de réalisation, la carte de mouvements peut être découpée en portions disjointes (formant une partition de la carte), chaque portion étant associée à une zone distincte des images de la scène surveillée, de façon à réaliser une partition des images obtenues (et donc une partition de la scène à surveiller). Selon les modes de réalisation, ces portions peuvent être de taille et/ou de forme identique(s) pour l'ensemble de la carte ou au contraire de taille et/ou de formes variables. Par exemple, dans certains modes de réalisation, chaque portion (pixel par exemple) de la carte de mouvements peut représenter P pixels dans les images obtenues, avec P entier naturel constant (ie il peut s'agir d'une correspondance 1-P (P>= 1).

Dans certains modes de réalisation, les portions de la carte de mouvements peuvent correspondre à des zones de tailles différentes dans les images obtenues. En particulier, dans certaines modes de réalisation, deux portions de taille identique d'une même carte de mouvements peuvent correspondre à des zones d'image de tailles différentes, la taille de la zone d'image affectée à une portion de la carte de mouvements dépendant par exemple d'une probabilité de présence d'un mouvement au sein de la zone d'image. Ainsi, lorsque la scène à surveiller comprend un point de passage d'un axe routier, la taille d'une zone d'image représentant une partie de l'axe routier (ie la chaussée), où circulent fréquemment des voitures, peut être inférieure à la taille d'une zone représentant les abords de l'axe routier, qui restent en général inoccupés.

Dans certains modes de réalisation, la carte de mouvements peut être une carte binaire, où toutes les portions de la carte correspondant à une zone d'images où un mouvement a été détecté sont affectés d'une première et même valeur constante (par exemple 1), toutes les portions de la carte de mouvements correspondant à une zone d'images où aucun mouvement n'a été détecté étant affectés d'une seconde et même valeur constante (par exemple 0).

Dans certains modes de réalisation, l'obtention de la carte binaire peut tenir compte des différences entre les mêmes composantes (par exemple selon au moins un même canal vidéo R, G, ou B) d'au moins certaines des N images obtenues. Par exemple, dans certains modes de réalisation, il peut être tenu compte des différences entre les composantes de chaque canal vidéo R, G, et B d'au moins certaines des N images obtenues, par exemple de l'ensemble des N images obtenues. Dans d'autres modes de réalisation, il peut être tenu compte des différences entre les composantes d'un seul canal vidéo R, G, ou B de l'ensemble des N images obtenues.

Dans certains modes de réalisation, les différences entre chaque composante vidéo des images peuvent être évaluées pour chaque portion, de façon à tenir compte pour chaque portion de l'existence d'une différence significative sur l'une au moins des composantes vidéo. Un tel mode de réalisation peut permettre de détecter des différences plus visibles sur une première composante vidéo des images pour une première portion de la carte de mouvements et de détecter des différences plus visibles sur une seconde composante vidéo des images pour une seconde portion de la carte de mouvements (en fonction par exemple des couleurs des objets en mouvements dans les images obtenues).Par exemple, dans un mode de réalisation où l'on tient compte des 3 composantes vidéo RGB de 3 images successives (N=3) et où la carte de mouvements est une carte binaire où un pixel $mvt_t(i,j)$ de la carte de mouvements correspond à un pixel d'abscisse $i$ et d'ordonnée $j$ dans une composante d'une image obtenue ($img_t(R,i,j)$ représentant par exemple la valeur de la composante R du pixel de coordonnée (i, j) de $img_t$), la valeur du pixel $mut_t(i,j)$ de la carte de mouvements peut être obtenue en appliquant la formule suivante. Dans cette formule, T est un entier naturel, strictement positif qui représente une amplitude de variation (par exemple une variation minimale).

$$mvt_t(i,j) = 1$$

si:

$$\max \begin{pmatrix} img_t(R,i,j) - 2img_{t-1}(R,i,j) + img_{t-2}(R,i,j); \\ img_t(V,i,j) - 2img_{t-1}(Vi,j) + img_{t-2}(V,i,j); \\ img_t(B,i,j) - 2img_{t-1}(B,i,j) + img_{t-2}(B,i,j) \end{pmatrix} > T$$

$$mvt_t(i,j) = 0 \; sinon$$

Dans une variante, la valeur d'une portion de la carte de mouvements peut être obtenue en calculant une différence entre les valeurs R,G, ou B de chaque composante pour les pixels des images en correspondance avec la portion considérée de la carte de mouvements. Par exemple, dans certains modes de réalisation où l'on tient compte des 3 composantes vidéo RGB de 3 images successives (N=3) et où la carte de mouvements est une carte binaire, la valeur d'une portion d'une carte de mouvements peut être est obtenue en calculant une différence entre des valeurs moyennes R,G, ou B de chaque composante pour les pixels des images en correspondance avec la portion considérée

Dans encore une autre variante, la carte de mouvements peut être choisie parmi les cartes de mouvements des 3 composantes vidéo, comme étant la carte de mouvements (parmi ces 3 cartes) comportant le plus de différences.

La valeur de T peut différer selon les modes de réalisation. La valeur de T peut par exemple être fonction d'une sensibilité désirée (qui peut être définie via une interface utilisateur du dispositif et/ou via un accès en lecture à un fichier de configuration) et/ou de caractéristique(s) de la capture de la scène. Par exemple, elle peut être fonction d'une quantité de lumière reçus par la caméra capturant la scène

Dans certains modes de réalisation, T peut avoir une valeur constante (de l'ordre de quelques dizaines, par exemple 25). Dans l'exemple illustré en figure 3, le procédé de détection comprend en outre une segmentation 330 de la carte de mouvements $mvt_t$ générée précédemment, en tenant compte d'au moins un objet en mouvement dans la carte.

Cette segmentation a notamment pour objectif, dans certains modes de réalisation, de localiser sur la carte de mouvements des formes géométriques (par exemple les plus petites possible) englobant au moins un ensemble de portions en mouvement (ie un ensemble de pixels blancs dans l'exemple de la figure 4) et associées potentiellement à un même objet.

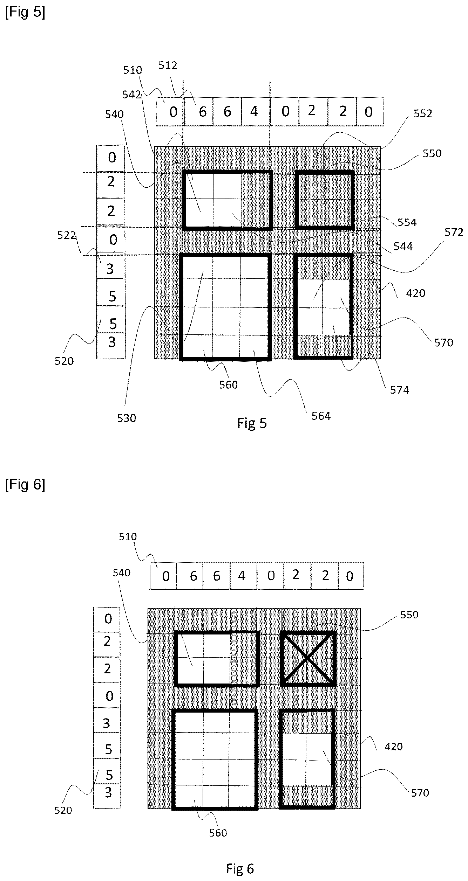

La carte de mouvements est découpée selon des axes verticaux et horizontaux, formant des rangées et des colonnes de portions (carrées ou rectangles), et un ensemble de portions associées à un même objet est un ensemble de carrés ou de rectangles. La segmentation 330 vise à générer 336 des formes rectangulaires englobant chacune un ensemble de portions. Bien entendu, dans d'autres modes de réalisation où la carte de mouvements est découpée différemment ( par exemple en arcs de cercle), les formes géométriques issues de la segmentation peuvent être des formes autres que rectangulaires. Dans les exemples illustrés en figures 5 à 8 qui représentent une partie de carte mouvements, il peut être obtenu 336 des formes géométriques englobantes rectangulaires 540, 550, 560, 570 correspondant aux intersections des colonnes et des rangées comprenant chacune au moins une portion en mouvement.

Cette obtention 336 s'appuie sur des histogrammes (comme décrit plus en détails ci-après).

Ainsi, comme illustré par les figures 3 et 5 à 8, la segmentation 330 comprend:

- une obtention 332 d'un premier histogramme 510, selon l'axe vertical de la carte $mvt_t$, comptant le nombre de portions auxquelles est associé un mouvement (par exemple les pixels blancs dans l'exemple de la figure 4) pour chaque colonne de la carte de mouvements. Cet histogramme 510 peut par exemple prendre la forme, dans l'exemple illustré, d'un premier tableau (ou liste) dont la longueur (ie le nombre d'éléments) est identique au nombre de colonnes de la carte de mouvements.
- une obtention 334 d'un second histogramme 520, selon l'axe horizontal de la carte $mut_t$, comptant le nombre de portions auxquelles est associé un mouvement (par exemple les pixels blancs dans l'exemple de la figure 4) pour chaque rangée de la carte de mouvements. Cet histogramme 520 peut par exemple prendre la forme, dans l'exemple illustré, d'un second tableau (ou liste) dont la longueur est identique au nombre de rangées de la carte de mouvements.

Dans certains modes de réalisation, les deux histogrammes peuvent être obtenus conjointement. Par exemple, comme illustré en figure 5, le procédé peut comprendre une initialisation à 0 des premier 510 et second 520 tableaux, puis un parcours de la carte $mvt_t$ 420, pour incrémenter pour chaque portion $p_i$ 530 en mouvement de la carte (ie chaque pixel blanc (de valeur 1 par exemple) selon l'exemple de la figure 4) la valeur des cases 512, 522 du premier et du second tableau correspondant respectivement au numéro de colonne et de rangées de la portion $p_i$ 530 dans la carte de mouvements.

- une obtention 336 de formes géométriques englobantes (rectangulaires dans l'exemple illustré) 540, 570, 560, 570, sur la carte de mouvements, dans les intersections des colonnes et des rangées où les valeurs des histogrammes sont non nulles.

La figure 5 illustre les formes géométriques englobantes 540, 550, 560, 570 obtenues en tenant compte des premier 510 et second 520 histogrammes. La périphérie (frontière) d'au moins une forme géométrique englobante peut être obtenue en identifiant les numéros de rangées et de colonnes correspondant aux cases des histogrammes 510, 520 où l'on observe une transition entre une valeur nulle et une valeur différente de 0, ou vice-versa.

Par exemple, en parcourant le premier histogramme de gauche à droite et le second histogramme de haut en bas, un passage de 0 à une valeur différente de 0 des deux histogrammes peut correspondre au coin supérieur gauche 542, 552, 562, 572 d'une forme géométrique englobante 540, 550, 560, 570, et un passage des deux histogrammes d'une valeur différente de 0 à une valeur égale à 0 peut correspondre au coin inférieur droit 544, 564, 574 d'une forme géométrique englobante 540, 550, 560, 570.

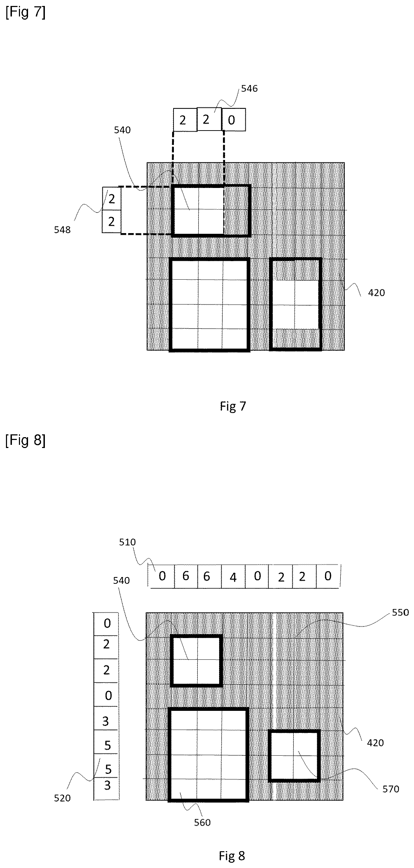

Dans certains modes de réalisation, comme illustré en figure 6, le procédé peut comprendre une également une suppression 338 des formes géométriques englobantes 550 (dites « vides ») ne comprenant aucune portion en mouvement (ie ne comportant que des pixels noirs dans l'exemple de la figure 4), de façon à supprimer les formes géométriques englobantes « fantômes » apparues du fait de l'approche « cumulée » par histogramme et à ne conserver que les formes géométriques englobantes comprenant au moins une portion en mouvement. Comme illustré en figure 6, certaines des formes géométriques englobantes 540, 560 conservées après suppression des géométriques englobantes vides, comprenant donc au moins une portion en mouvement (et donc correspondant à un objet « réel » en mouvement dans la scène capturée) peuvent encore « déborder » des objets réels (ie contenir des portions ne correspondant pas à un mouvement de l'objet). Aussi, dans certains modes de réalisation, comme illustré en figure 7, le procédé peut comprendre au moins une itération des obtentions d'histogrammes et de formes géométriques englobantes, non pas à partir de la carte de mouvements comme décrit ci-avant mais à partir d'au moins une forme géométrique englobante déjà obtenue lors d'une précédente itération (par exemple une forme géométrique englobante non « vide »). Cette au moins une itération peut éventuellement permettre (comme illustré en figure 7) d'obtenir au moins une autre forme géométrique englobante sur laquelle pourra être effectuée par exemple une nouvelle itération. Lors d'une itération, les premier tableau 550 et second tableau 560 représentatifs des histogrammes d'une forme géométrique englobante 540 ont alors des tailles (ie nombre d'éléments) correspondant à l'une des dimensions (largeur, longueur) de la forme géométrique englobante sur laquelle porte l'itération comme illustré en figure 7. L'utilisation d'histogramme de tailles plus restreintes peut aider à obtenir au moins une forme géométrique englobante plus petite que celle à partir de laquelle elle a été obtenue, et optionnellement à identifier et à supprimer, parmi ces nouvelles formes obtenues, de nouvelle formes « vides », comme illustré en figure 8. De ce fait, dans certains modes de réalisation, les itérations peuvent aider à détourer plus finement les parties en mouvement d'un objet représentées par une forme géométrique englobante.

Un critère d'arrêt des itérations peut être par exemple l'absence de génération d'une nouvelle forme géométrique englobante lors des M dernières itérations, avec M entier strictement positif (par exemple égal à 1), comme illustré en figure 8. Dans un tel mode de réalisation, les dernières formes géométriques englobantes obtenues ne contiennent donc plus ni ligne ni colonne vide comme illustré en figure 8).

Dans l'exemple illustré en figures 3 à 8, la carte de mouvements est découpée selon des axes horizontaux et verticaux. Cependant dans certains modes de réalisation, d'autres axes de découpage peuvent être utilisés. Par exemple, des axes orthogonaux inclinés selon un premier angle par rapport à la verticale peuvent être utilisés. Une telle variante peut par exemple être utile lorsque au moins certains objets de la carte de mouvements ne sont pas séparables par les axes horizontaux et verticaux. Dans un tel mode de réalisation, le procédé 300 peut comprendre une étape optionnelle (non illustrée en figure 3) de transformation de la carte de mouvements (par exemple une rotation selon le premier angle) avant la mise en œuvre de la segmentation 330 décrite ci-dessus.

Comme illustré en figure 3, dans certains modes de réalisation, le procédé 300 peut comprendre un suivi 340 (ou « tracking » selon la terminologie anglaise) d'au moins un objet en mouvement dans la scène surveillée. Ce suivi peut être optionnel dans certains modes de réalisation.

A un instant donné, un objet n'est que partiellement visible via la caméra capturant la scène surveillée (certaines parties de l'objet étant par exemple occultées par l'objet lui-même vis-à-vis de la caméra). De plus, au fil du mouvement de l'objet, des parties différentes de l'objet deviennent visibles à la caméra (donc sur les images obtenues) au fil du temps. De ce fait, l'ensemble des portions associées à un même objet dans des cartes de mouvement peut donc varier en termes de forme, de taille et/ou de position au fil des images (donc entre plusieurs cartes de mouvements). L'utilisation pour le suivi de formes géométriques englobantes, moins variables que les objets eux même, peut aider à « lisser » le suivi. Dans certains modes de réalisation, le suivi peut en outre tenir compte, des rapports entre les dimensions des formes englobantes (par exemple un ratio entre la largeur et la longueur d'une forme) . En effet, utiliser un tel rapport entre les dimensions peut aider, par exemple, à réaliser un suivi moins sensible aux variations apparentes de taille (sur les images), d'un objet suite à une variation de sa distance par rapport à la caméra capturant la scène, et donc à aider à conserver un même identifiant d'objet sur une pluralité de formes géométriques englobantes de différentes cartes de mouvements correspondant à un même objet dont la distance varie par rapport à la caméra. Le suivi 340 peut par exemple être réalisé sur au moins une première forme géométrique englobante issue de la segmentation 330 d'une première carte de mouvement, en liaison avec au moins une deuxième carte de mouvements précédant temporellement la première carte de mouvement. Le suivi 340 peut par exemple être réalisé sur l'ensemble des formes géométriques englobantes issues de la segmentation 330 entre au moins deux cartes de mouvements générés à des instants différents. Il s'agit d'une part d'attribuer à une forme géométrique englobante un identifiant différent de ceux des autres formes géométriques englobantes en mouvement dans la carte de mouvement à laquelle elle appartient, et d'autre part de tenter de suivre les objets englobés par les formes géométriques englobantes entre les différentes cartes de mouvements (par exemple des cartes de mouvements consécutives) . Pour cela, un même identifiant peut être attribué aux formes géométriques englobantes des cartes de mouvements successives, qui paraissent correspondre à un même objet.

On détaille ci-après plus précisément un exemple de suivi entre deux cartes de mouvements $mvt_{t-1}$ et $mvt_t$ successives temporellement.

Dans certains modes de réalisation, le suivi 340 peut comprendre une obtention 342 d'une information de positionnement relatif des formes géométriques englobantes de la carte de mouvements $mvt_t$ et des formes géométriques englobantes de la carte de mouvements $mvt_{t-1}$. Par exemple, le procédé peut comprendre une obtention 342 des distances (par exemple euclidiennes) entre les centroïdes des formes géométriques englobantes de la carte de mouvements $mvt_t$ et de la carte de mouvements $mvt_{t-1}$.

Le terme « centroïde » désigne ici le centre d'une forme géométrique englobante. La distance euclidienne d entre deux formes géométriques englobantes dont les centroïdes ont pour coordonnées respectives $x_1,y_1$ et $x_2,y_2$ peut être obtenue par l'équation :

$$d = \sqrt{(x_1 - x_2)^2 + (y_1 - y_2)^2}.$$

Comme illustré en figure 3, le procédé peut comprendre, pour au moins une première forme géométrique englobante de la carte de mouvements $mvt_t$ une association 344 conditionnelle de cette première forme géométrique englobante avec une seconde forme géométrique englobante de la carte de mouvements $mvt_{t-1}$, tenant compte de l'information de positionnement relatif obtenue et une attribution 346 d'un identifiant d'objet à la première forme géométrique englobante tenant compte de cette association conditionnelle. La seconde forme géométrique englobante est par exemple la forme géométrique englobante de la carte de mouvements $mvt_{t-1}$ la plus proche (selon l'information de positionnement relatif obtenue) de la première forme géométrique englobante de la carte de mouvements $mvt_t$ .

Dans certains modes de réalisation où l'information de positionnement relatif de deux formes géométriques englobantes est une distance entre ces deux formes géométriques englobantes, l'association de la première forme géométrique englobante avec la seconde forme géométrique englobante peut être effective lorsque la distance entre la première forme géométrique englobante de la carte de mouvements $mvt_t$ et la seconde forme géométrique englobante de la carte de mouvements $mvt_{t-1}$ est inférieure à une première distance (utilisée comme un seuil). Dans certains modes de réalisation, le procédé peut comprendre une attribution 346 à la première forme géométrique englobante de l'identifiant d'objet déjà attribué (précédemment) à la seconde forme géométrique englobante. En effet, les première et seconde forme géométrique englobante sont considérées comme correspondant au même objet.

Lorsque la distance entre la première forme géométrique englobante de la carte de mouvements $mvt_t$ et la seconde forme géométrique englobante de mouvements $mvt_{t-1}$ est supérieure à la première distance, la première forme géométrique englobante est considérée comme correspondant à un autre objet que la seconde forme géométrique englobante. Lorsque la distance entre la première forme géométrique englobante de la carte de mouvements $mvt_t$ et l'ensemble des formes géométriques englobantes de la carte de mouvements $mvt_{t-1}$ est supérieure à la première distance, la première forme géométrique englobante est considérée comme correspondant à un objet nouvellement apparu ou nouvellement en mouvement dans la scène et le procédé comprend une attribution 346 d'un nouvel identifiant d'objet (non attribué à l'instant t à une autre forme géométrique englobante de la même carte de mouvements ou d'une autre carte de mouvements) à la première forme géométrique englobante .

Les nouveaux identifiants d'objet peuvent par exemple être générés de façon à garantir leur unicité vis-à-vis des autres identifiants déjà attribués à un instant courant. Par exemple, il peut s'agir d'identifiants d'objet comprenant chacun au moins une portion numérique obtenue par incrémentation successives d'une même variable numérique.

Dans certains modes de réalisation, le procédé peut comprendre en outre une mémorisation 348 (dans une zone de stockage accessible au dispositif) de l'identifiant d'objet nouvellement attribué (par exemple dans un champ d'une structure de données représentant la première forme géométrique englobante).

Selon les modes de réalisation, la première distance utilisée comme seuil peut être une distance constante ou une distance variable, par exemple ajustable par configuration (de façon par exemple à dépendre d'un type d'objets à suivre. En effet, la distance qu'un même objet est susceptible de parcourir entre deux images obtenues successives (et donc entre deux cartes de mouvement successives) peut varier fortement selon les objets (par exemple selon qu'il s'agisse d'une voiture, d'un piéton etc.. ).

Dans certains modes de réalisation, le procédé peut comprendre un filtrage 350 des formes géométriques englobantes suivies. Ce filtrage peut par exemple être fonction d'un type d'objet visé par le suivi, de façon à exclure du suivi les formes géométriques englobantes ne correspondant pas a priori à un type d'objets visé, et/ou au contraire à limiter le suivi aux formes correspondant a priori à un type d'objets visé. Par exemple, dans le mode de réalisation illustré, le filtrage peut permettre de limiter le suivi aux formes géométriques englobantes identifiées comme des véhicules.

L'identification des formes géométriques englobantes à exclure et/ou auxquelles limiter le suivi peut par exemple être réalisée au fil de l'eau sur l'ensemble des formes géométriques englobantes suivies 340 dans les cartes de mouvements.

L'identification des formes géométriques englobantes à exclure et/ou auxquelles limiter le suivi peut par exemple être mise en œuvre en tenant compte de la taille des formes géométriques englobantes par rapport à une taille attendue (probable) des objets visés, ou d'un ratio entre la largeur et/ou la longueur des formes géométriques englobantes.

Dans les modes de réalisation illustrés, où l'on vise des véhicules (camion, voiture, moto, ...), les formes géométriques englobantes trop petites pour correspondre à un véhicule (et considérées comme des objets parasites - comme un piéton ou un oiseau) peuvent par exemple être exclues du suivi.

De plus, dans certains modes de réalisation, une indication relative à un type d'objet visé (camion, voiture, moto, ...) auquel correspond une forme géométrique englobante peut être déduit de la largeur, de la longueur et/ou du ratio entre largeur et longueur de la forme géométrique englobante. Il peut s'agir par exemple d'une comparaison avec une table de correspondance ou une bibliothèque de formes géométriques englobantes classifiées par types d'objets.

En variante, dans certains modes de réalisation, le procédé peut mettre en œuvre des modèles « frugaux » d'intelligence artificielle pour, à partir de la largeur et de la longueur des géométriques englobantes, identifier un type d'objet visé (par exemple une nature de véhicules). Il peut, par exemple, s'agir de réseaux de neurones ayant un faible nombre de couches de neurones par couche et dont les paramètres ont été quantifiés pour garder un caractère frugal en termes de consommation de ressources informatiques (mémoire et/ou complexité de traitement). L'inférence d'un tel réseau de neurones peut par exemple être mise en œuvre localement sur le dispositif 200.

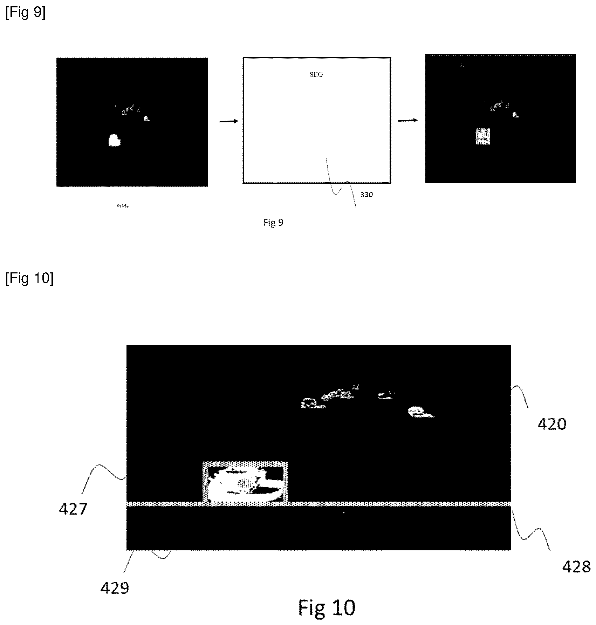

Selon les modes de réalisation, différents traitements 360 peuvent en outre être mis en œuvre sur les formes géométriques englobantes suivies (et optionnellement filtrées). Par exemple, dans certains modes de réalisation, le procédé peut comprendre un comptage 360 des formes géométriques englobantes filtrées. Dans les modes de réalisation illustrés, les formes géométriques englobantes correspondant à des véhicules peuvent par exemple être comptées. Les traitements mis en œuvre peuvent tenir compte par exemple d'au moins une partie, dite d'intérêt, considérée comme intéressante d'une carte de mouvements. Dans certains modes de réalisation, la « partie d'intérêt » peut être une forme géométrique en une dimension (comme une ligne (ou droite) ou une courbe) Il peut s'agir par exemple d'une limite (dite d'intérêt) que peut franchir un objet en mouvement ou d'une zone. Dans l'exemple illustré en figure 10, une forme géométrique englobante assimilée à un véhicule peut être comptabilisée lorsqu'elle franchit une droite 428 d'intérêt d'une carte de mouvements 420. Dans certains modes de réalisation, la « partie d'intérêt » peut être une forme géométrique en deux dimensions (comme un cercle, un triangle, un carré, un rectangle, un losange etc.. ). Il peut s'agir par exemple d'une surface or zone (dite d'intérêt) dans laquelle peut entrer ou sortir un objet en mouvement. Par exemple, une forme géométrique englobante peut n'être comptabilisée que lorsque son centroïde se trouve dans une zone d'intérêt d'une carte de mouvements.

Dans certains modes de réalisation, plusieurs parties d'intérêt (de même dimension ou dimensions différentes) relatives à la scène captée peuvent être définies dans les cartes de mouvements.

Dans certains modes de réalisation, le procédé peut prendre en compte (pour le comptage 360 par exemple) une direction de déplacement des formes géométriques englobantes. Dans l'exemple illustré en figure 10, les formes géométriques englobantes assimilées à un véhicule peuvent ainsi n'être comptabilisée que si elles franchissent la ligne d'intérêt 428 de la partie 427 au-dessus de la ligne 428 de la carte de mouvements 420 vers la partie 429 au-dessous de la ligne 428 de la carte de mouvements 420. La direction de déplacement d'un objet peut par exemple être obtenue (lors du suivi 340 des formes géométriques englobantes par exemple) à partir des coordonnées successives des centroïdes des formes géométriques englobantes auxquelles est attribuée l'identifiant de l'objet dans les cartes de mouvement. Les coordonnées du centroïde d'une forme géométrique englobante peuvent par exemple être stockées dans la structure de données représentant la forme géométrique englobante.

Dans certains modes de réalisation, le procédé peut comprendre un rendu 370 d'au moins une carte de mouvements sur une interface utilisateur dudit dispositif 200. Le rendu peut en outre comprendre, dans certains modes de réalisation, au moins une forme géométrique englobante de la carte de mouvements et éventuellement un identifiant d'objet auquel elle est associée. Il peut également comprendre, de façon optionnelle, au moins une partie d'intérêt de la carte de mouvements.

Au moins certains modes de réalisation du procédé de la présente demande peuvent n'utiliser qu'un petits nombre N d'images (par exemple 3) pour construire une carte de mouvements et être mise en œuvre pour des applications où seuls quelques objets sont suivis en parallèle, ou ne viser que quelques types d'objet, et peuvent donc moins être gourmands en mémoire que certaines solutions de l'art antérieur.

Dans au moins certains modes de réalisation, les images obtenues peuvent être des images basse résolution. De plus, les opérations mises en œuvre sur ces mages peuvent être des opérations algébriques simples pouvant être disponibles sur tous types de processeurs et de microcontrôleurs courants. Aussi, au moins certains modes de réalisation du procédé de la présente demande peuvent être moins gourmands en capacité de traitement et/en énergie que certaines solutions de l'art antérieur. Par exemple, la mise en œuvre d'au moins certains modes de réalisation du procédé de la présente demande ne nécessite pas de processeurs spécifiques comme des processeurs spécialisés dans le traitement graphique (de type GPU (pour Graphic Processing Unit selon la terminologie anglaise) par exemple) ou dans l'inférence de réseaux de neurones.(de type TPU (pour Tensor Processing Unit selon la terminologie anglaise) par exemple).

De ce fait, certains modes de réalisation du procédé de la présente demande peuvent être mis en œuvre sur des dispositifs « légers » (de type Raspberry Pi 3 ©), tout en permettant un traitement de vidéo de 640 x 480 (ou 480 x 640) pixels à 12 images par seconde environ (lorsque certaines solutions de l'art antérieur peuvent par exemple permettre de traiter seulement que des vidéos 416 x 416 à 2 ou 3 images par seconde sur ce type de dispositif). Certains modes de réalisation de la présente demande peuvent ainsi aider à bénéficier d'une solution d'identification et de comptage d'objets à plus faible coût de calcul que certaines solutions de l'art antérieur, et nécessitant peu d'énergie. De tels modes de réalisation peuvent ainsi aider à résoudre les problématiques récurrentes d'installation de ces systèmes de comptage (en évitant notamment des travaux coûteux) et d'utilisation de ceux-ci (en termes de coût en énergie et puissance de calcul).

Certains exemples de mise en œuvre du procédé de la présente demande ont été détaillés ci-dessus. Cependant, le procédé peut trouver de nombreuses applications pour identifier et compter des objets en mouvements dans des domaines divers, et sans nécessité de lourds travaux d'infrastructure, ou des capacités importantes de traitement ou de communications. Dans certains modes de réalisation, le procédé de la présente demande peut être adapté à une détection, un suivi, une identification et/ou un comptage des véhicules à très faibles coûts, et peut par exemple être implémenté par un dispositif mobile, facilement transportable par exemple en fonction des besoins.

Par exemple, le procédé peut être applicable, dans au moins certains de ses modes de réalisation, dans des environnements difficiles (isolés ou avec peu d'infrastructures ou de moyens informatiques) (comme c'est parfois le cas dans des pays en voie de développement). Le procédé peut s'appliquer en particulier à des routes, des autoroutes, des abords d'entrepôts ou de sites industriels où il est nécessaire de compter les véhicules qui rentrent et sortent d'une zone.

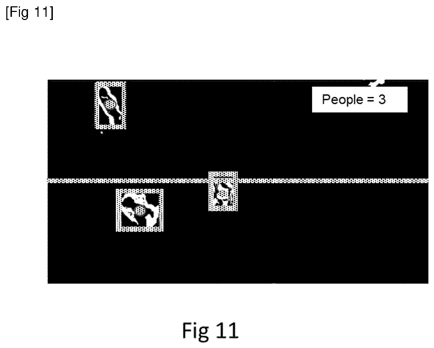

Le procédé peut également s'appliquer, certains modes de réalisation, à l'identification et au comptage de vélos, d'animaux ou de piétons comme le montre la figure 11 (qui illustre une identification de piétons à parti d'images obtenues en vue de dessus d'une scène)

Dans certains modes de réalisation, le procédé peut être mise en œuvre sans utiliser des modèles coûteux d'intelligence artificielle (en termes de puissance de calcul et de capacité de stockage et de temps d'apprentissage), et/ou de systèmes sophistiquées distants consommateurs de ressources réseau.

**Revendications**

1. Procédé de détection de mouvement, mis en œuvre dans un dispositif électronique, ledit procédé comprenant

   - une obtention (310) d'au moins deux images espacées temporellement et capturant une même scène d'un flux vidéo ;
   - une obtention (320) d'au moins une première carte de mouvements découpée en portions représentatives des différences entre les valeurs d'au moins deux canaux vidéo pour une zone d'au moins deux desdites images, lesdites portions découpant ladite carte de mouvements en rangées et en colonnes selon deux axes de découpage différents,
   - une obtention d'un premier histogramme relatif auxdites portions, le premier histogramme comptabilisant le nombre de portions en mouvement par colonne dans ladite première carte de mouvements;
   - une obtention d'un second histogramme relatif auxdites portions, ledit second histogramme comptabilisant le nombre de portions en mouvement par rangée dans ladite première carte de mouvements;
   - une obtention d'au moins une forme géométrique englobant un ensemble de portions en mouvement de ladite première carte de mouvements et correspondant à une intersection dans la carte de mouvements des colonnes comprenant au moins un élément non nul du premier histogramme et des rangées comprenant au moins un élément non nul du second histogramme.

2. Dispositif électronique comprenant au moins un processeur, ledit au moins un processeur étant configuré pour :

   - une obtention (310) d'au moins deux images espacées temporellement et capturant une même scène d'un flux vidéo ;
   - une obtention (320) d'au moins une première carte de mouvements découpée en portions représentative des différences entre les valeurs d'au moins deux canaux vidéo, pour une zone d'au moins deux desdites images, lesdites portions découpant ladite carte de mouvements en rangées et en colonnes selon deux axes de découpage différents,
   - une obtention d'un premier histogramme relatif auxdites portions, le premier histogramme comptabilisant le nombre de portions en mouvement par colonne dans ladite première carte de mouvements;
   - une obtention d'un second histogramme relatif auxdites portions, ledit second histogramme comptabilisant le nombre de portions en mouvement par rangée dans ladite première carte de mouvements;

   - une obtention d'au moins une forme géométrique englobant un ensemble de portions en mouvement de ladite première carte de mouvements et correspondant à une intersection dans la carte de mouvements **des** colonnes comprenant au moins un élément non nul du premier histogramme et des rangées comprenant au moins un élément non nul du second histogramme.

3. Procédé selon la revendication 1, ou dispositif électronique selon la revendication 2, où la valeur d'une portion de ladite première carte de mouvements est une valeur binaire tenant compte des différences entre les valeurs de chaque canal vidéo pour ladite zone desdites images.

4. Procédé selon la revendication 3, ou dispositif électronique selon la revendication 3, où ladite valeur d'une portion de ladite première carte de mouvements tient compte du maximum des différences de chaque canal vidéo pour ladite zone desdites images.

5. Procédé selon la revendication 1 ou 3 ou 4, où le procédé comprend une obtention d'une carte de mouvements pour chaque canal vidéo desdites images, ou dispositif électronique selon l'une des revendications 2 à 4, où ledit au moins un processeur est configuré pour une obtention d'une carte de mouvements pour chaque canal vidéo desdites images, et où

- la carte de mouvements d'un canal vidéo desdites images est découpée en portions représentatives des différences pour une zone d'au moins deux desdites images, pour le canal vidéo associé à ladite carte de mouvements,

- ladite première carte de mouvements est la carte de mouvements, parmi les cartes de mouvements associées à chacun des canaux vidéo desdites images, qui comporte le plus de portions dont la valeur binaire est représentative d'une différence pour une zone desdites images, pour le canal vidéo associé.

6. Procédé selon l'une des revendications 1 ou 3 à 5, ou dispositif électronique selon l'une des revendications 2 à 5, où ladite forme géométrique est une forme rectangulaire.

7. Procédé selon l'une des revendications 1 ou 3 à 6 dans lequel ledit procédé est mis en œuvre de façon itérative sur des images successives du flux vidéo et comprend :
une obtention d'une première carte de mouvements et d'une seconde carte de mouvements précédant temporellement ladite première carte de mouvements, une association conditionnelle d'une première forme géométrique englobante obtenue pour la première carte de mouvements avec au moins une seconde forme géométrique englobante obtenue pour au moins ladite seconde carte de mouvements, ladite association tenant compte des positions relatives desdites premières et secondes formes englobante sur lesdites première et seconde carte de mouvements.

8. Procédé selon la revendication 6 comprenant une attribution d'un même identifiant d'objet auxdites première et seconde forme géométrique associées.

9. Procédé selon l'une des revendications 1 ou 3 à 8 comprenant, ou dispositif électronique selon l'une des revendications 2 à 6 où ledit au moins un processeur est configuré pour, une attribution d'un type d'objet à au moins une forme géométrique, ladite attribution tenant compte d'une taille, d'une largeur et/ou d'une longueur de ladite forme géométrique.

10. Procédé selon l'une des revendications 1 ou 3 à 9 comprenant, ou dispositif électronique selon l'une des revendications 2 à 6 ou 9, où ledit au moins un processeur est configuré pour

- une obtention d'un troisième histogramme comptabilisant le nombre de portions en mouvement par colonne dans au moins une troisième desdites formes englobantes obtenues ;
- une obtention d'un quatrième histogramme comptabilisant le nombre de portions en mouvement par rangée dans ladite troisième forme englobante obtenue;
- une obtention d'au moins une quatrième forme géométrique englobante correspondant à l'intersection dans ladite première carte de mouvements des colonnes comprenant au moins un élément non nul du troisième histogramme et des rangées comprenant au moins un élément non nul du quatrième histogramme.

11. Procédé selon la revendication 10, ou dispositif électronique selon la revendication 10, où lesdites obtentions desdits troisième et quatrième histogrammes sont mises en œuvre successivement sur au moins une forme géométrique englobante précédemment obtenue de ladite première carte de mouvements.

12. Procédé selon la revendication 11 dans lequel le procédé comprend, , ou dispositif électronique selon la revendication 11 où ledit au moins un processeur est configuré pour, préalablement au découpage de ladite première carte de mouvements, une rotation de ladite première carte de mouvements.

13. Programme d'ordinateur comprenant des instructions pour la mise en œuvre, lorsque le programme est exécuté par un processeur d'un dispositif électronique, du procédé de détection de mouvement selon la revendication 1.

14. Support d'enregistrement lisible par un processeur et sur lequel est enregistré un programme d'ordinateur comprenant des instructions pour la mise en œuvre, lorsque le programme est exécuté par un processeur d'un dispositif électronique, du procédé de détection de mouvement selon la revendication 1.

**Patentansprüche**

1. Verfahren zur Detektion von Bewegung, das in einer elektronischen Vorrichtung durchgeführt wird, wobei das Verfahren Folgendes umfasst

- Erhalten (310) von mindestens zwei zeitlich beabstandeten und eine selbe Szene eines Videostreams aufnehmenden Bildern;
- Erhalten (320) mindestens einer ersten Bewegungskarte, die in Abschnitte segmentiert ist, welche Unterschiede zwischen den Werten von mindestens zwei Videokanälen für einen Bereich von mindestens zweien der Bilder repräsentieren, wobei die Abschnitte die Bewegungskarte in Reihen und Spalten entlang von zwei verschiedenen Segmentierungsachsen segmentieren,
- Erhalten eines ersten Histogramms bezüglich der Abschnitte, wobei das erste Histogramm die Anzahl von sich bewegenden Abschnitten je Spalte in der ersten Bewegungskarte zählt;
- Erhalten eines zweiten Histogramms bezüglich der Abschnitte, wobei das zweite Histogramm die Anzahl von sich bewegenden Abschnitten je Reihe in der ersten Bewegungskarte zählt;
- Erhalten mindestens einer geometrischen Form, die eine Menge von sich bewegenden Abschnitten der ersten Bewegungskarte beinhaltet und einer Schnittmenge in der Bewegungskarte der Spalten, die mindestens ein Element ungleich null des ersten Histogramms umfassen, und der Reihen, die mindestens ein Element ungleich null des zweiten Histogramms umfassen, entspricht.

2. Elektronische Vorrichtung, die mindestens einen Prozessor umfasst, wobei der mindestens eine Prozessor ausgestaltet ist zum:

- Erhalten (310) von mindestens zwei zeitlich beabstandeten und eine selbe Szene eines Videostreams aufnehmenden Bildern;
- Erhalten (320) mindestens einer ersten in Abschnitte segmentierten Bewegungskarte, die Unterschiede zwischen den Werten von mindestens zwei Videokanälen für einen Bereich von mindestens zweien der Bilder repräsentiert, wobei die Abschnitte die Bewegungskarte in Reihen und Spalten entlang von zwei verschiedenen Segmentierungsachsen segmentieren,
- Erhalten eines ersten Histogramms bezüglich der Abschnitte, wobei das erste Histogramm die Anzahl von sich bewegenden Abschnitten je Spalte in der ersten Bewegungskarte zählt;
- Erhalten eines zweiten Histogramms bezüglich der Abschnitte, wobei das zweite Histogramm die Anzahl von sich bewegenden Abschnitten je Reihe in der ersten Bewegungskarte zählt;
- Erhalten mindestens einer geometrischen Form, die eine Menge von sich bewegenden Abschnitten der ersten Bewegungskarte beinhaltet und einer Schnittmenge in der Bewegungskarte der Spalten, die mindestens ein Element ungleich null des ersten Histogramms umfassen, und der Reihen, die mindestens ein Element ungleich null des zweiten Histogramms umfassen, entspricht.

3. Verfahren nach Anspruch 1 oder elektronische Vorrichtung nach Anspruch 2, wobei der Wert eines Abschnitts der ersten Bewegungskarte ein binärer Wert ist, der die Unterschiede zwischen den Werten jedes Videokanals für den Bereich der Bilder berücksichtigt.

4. Verfahren nach Anspruch 3 oder elektronische Vorrichtung nach Anspruch 3, wobei der Wert eines Abschnitts der ersten Bewegungskarte das Maximum der Unterschiede jedes Videokanals für den Bereich der Bilder berücksichtigt.

5. Verfahren nach Anspruch 1 oder 3 oder 4, wobei das Verfahren ein Erhalten einer Bewegungskarte für jeden Videokanal der Bilder umfasst, oder elektronische Vorrichtung nach einem der Ansprüche 2 bis 4, wobei der mindestens eine Prozessor zu einem Erhalten einer Bewegungskarte für jeden Videokanal der Bilder ausgestaltet ist, und wobei

- die Bewegungskarte eines Videokanals der Bilder in Abschnitte segmentiert ist, die für die Unterschiede für einen Bereich von mindestens zweien der Bilder für den der Bewegungskarte zugeordneten Videokanal repräsentativ sind;
- die erste Bewegungskarte die Bewegungskarte unter den jedem der Videokanäle der Bilder zugeordneten Bewegungskarten ist, welche die meisten Abschnitte umfasst, deren binärer Wert für einen Unterschied für einen Bereich der Bilder für den zugeordneten Videokanal repräsentativ ist.

6. Verfahren nach einem der Ansprüche 1 oder 3 bis 5 oder elektronische Vorrichtung nach einem der Ansprüche 2 bis 5, wobei die geometrische Form eine rechteckige Form ist.

7. Verfahren nach einem der Ansprüche 1 oder 3 bis 6, wobei das Verfahren an aufeinander folgenden Bildern des Videostreams iterativ durchgeführt wird und Folgendes umfasst:
Erhalten einer ersten Bewegungskarte und einer zweiten Bewegungskarte, die der ersten Bewegungskarte zeitlich vorausgeht, bedingte Zuordnung einer ersten begrenzenden geometrischen Form, die für die erste Bewegungskarte erhalten wird, zu mindestens einer zweiten begrenzenden geometrischen Form, die für mindestens die zweite Bewegungskarte erhalten wird, wobei die Zuordnung die relativen Positionen der ersten und der zweiten begrenzenden Form auf der ersten und der zweiten Bewegungskarte berücksichtigt.

**8.** Verfahren nach Anspruch 6, umfassend das Zuweisen einer selben Objektkennung zu den zugeordneten ersten und zweiten geometrischen Formen.

**9.** Verfahren nach einem der Ansprüche 1 oder 3 bis 8, das umfasst, oder elektronische Vorrichtung nach einem der Ansprüche 2 bis 6, wobei der mindestens eine Prozessor ausgestaltet ist, mindestens einer geometrischen Form einen Objekttyp zuzuweisen, wobei das Zuweisen eine Größe, eine Breite und/oder eine Länge der genannten geometrischen Form berücksichtigt.

**10.** Verfahren nach einem der Ansprüche 1 oder 3 bis 9, das Folgendes umfasst, oder elektronische Vorrichtung nach einem der Ansprüche 2 bis 6 oder 9, wobei der mindestens eine Prozessor zu Folgendem ausgestaltet ist

- Erhalten eines dritten Histogramms, das die Anzahl von sich bewegenden Abschnitten je Spalte in mindestens einer dritten der erhaltenen begrenzenden Formen zählt;
- Erhalten eines vierten Histogramms, das die Anzahl von sich bewegenden Abschnitten je Reihe in der erhaltenen dritten begrenzenden Form zählt;
- Erhalten mindestens einer vierten begrenzenden geometrischen Form, die der Schnittmenge in der ersten Bewegungskarte der Spalten, die mindestens ein Element ungleich null des dritten Histogramms umfassen, und der Reihen, die mindestens ein Element ungleich null des vierten Histogramms umfassen, entspricht.

**11.** Verfahren nach Anspruch 10 oder elektronische Vorrichtung nach Anspruch 10, wobei das Erhalten des dritten und des vierten Histogramms nacheinander an mindestens einer zuvor erhaltenen begrenzenden geometrischen Form der ersten Bewegungskarte durchgeführt wird.

**12.** Verfahren nach Anspruch 11 oder elektronische Vorrichtung nach Anspruch 11, wobei das Verfahren umfasst bzw. der mindestens eine Prozessor dazu ausgestaltet ist, die erste Bewegungskarte vor dem Segmentieren der ersten Bewegungskarte zu drehen.

**13.** Computerprogramm, das Anweisungen umfasst, die bei der Ausführung des Programms durch einen Prozessor einer elektronischen Vorrichtung das Verfahren zur Detektion von Bewegung nach Anspruch 1 ausführen.

**14.** Speichermedium, das durch einen Prozessor lesbar ist und auf dem ein Computerprogramm gespeichert ist, das Anweisungen umfasst, die bei der Ausführung des Programms durch einen Prozessor einer elektronischen Vorrichtung das Verfahren zur Detektion von Bewegung nach Anspruch 1 ausführen.

**Claims**

**1.** Method for detecting motion, implemented in an electronic device, said method comprising

- obtaining (310) at least two frames that are spaced apart temporally and that capture the same scene of a video stream;
- obtaining (320) at least a first motion map divided into segments representative of differences between the values of at least two video channels for a region of at least two of said frames, said segments dividing said motion map into rows and columns along two different division axes,
- obtaining a first histogram relating to said segments, the first histogram counting the number of moving segments per column in said first motion map;
- obtaining a second histogram relating to said segments, said second histogram counting the number of moving segments per row in said first motion map;
- obtaining at least one geometric shape bounding a set of moving segments of said first motion map and corresponding to an intersection in the motion map of columns comprising at least one non-zero element of the first histogram and of rows comprising at least one non-zero element of the second histogram.

**2.** Electronic device comprising at least one processor, said at least one processor being configured to:

- obtain (310) at least two frames that are spaced apart temporally and that capture the same scene of a video stream;
- obtain (320) at least a first motion map divided into segments representative of differences between the values of at least two video channels, for a region of at least two of said frames, said segments dividing said motion map into rows and columns along two different division axes,
- obtain a first histogram relating to said segments, the first histogram counting the number of moving segments per column in said first motion map;
- obtain a second histogram relating to said segments, said second histogram counting the number of moving segments per row in said first motion map;
- obtain at least one geometric shape bounding a set of moving segments of said first motion map and corresponding to an intersection in the motion map of columns comprising at least one non-zero element of the first histogram and of rows comprising at least one non-zero element of the second histogram.

3. Method according to Claim 1 or electronic device according to Claim 2, wherein the value of a segment of said first motion map is a binary value reflecting differences between the values of each video channel for said region of said frames.

4. Method according to Claim 3, or electronic device according to Claim 3, wherein said value of a segment of said first motion map reflects the maximum of the differences of each video channel for said region of said frames.

5. Method according to Claim 1 or 3 or 4, wherein the method comprises obtaining one motion map for each video channel of said frames, or an electronic device according to any of Claims 2 to 4, wherein said at least one processor is configured to obtain a motion map for each video channel of said frames, and wherein

- the motion map of a video channel of said frames is divided into segments representative of differences for a region of at least two of said frames, for the video channel associated with said motion map,
- said first motion map is the motion map, among the motion maps associated with each of the video channels of said frames, that comprises the most segments of which the binary value is representative of a difference for a region of said frames, for the associated video channel.

6. Method according to any of Claims 1 or 3 to 5, or electronic device according to any of Claims 2 to 5, wherein said geometric shape is a rectangular shape.

7. Method according to any of Claims 1 or 3 to 6 wherein said method is implemented iteratively on successive frames of the video stream and comprises:
obtaining a first motion map and a second motion map temporally preceding said first motion map, determining a conditional association between a first bounding geometric shape obtained for the first motion map and at least one second bounding geometric shape obtained for at least said second motion map, said association reflecting relative positions of said first and second bounding shapes in said first and second motion maps.

8. Method according to Claim 6 comprising assigning the same object identifier to said associated first and second geometric shapes.

9. Method according to any of Claims 1 or 3 to 8 comprising, or electronic device according to any of Claims 2 to 6 wherein said at least one processor is configured to assign an object type to at least one geometric shape, said assignment reflecting a size, a width and/or a length of said geometric shape.

10. Method according to any of Claims 1 or 3 to 9 comprising, or electronic device according to any of Claims 2 to 6 or 9, wherein said at least one processor is configured to

- obtain a third histogram counting the number of moving segments per column in at least a third of said obtained bounding shapes;
- obtain a fourth histogram counting the number of moving segments per row in said third obtained bounding shape;
- obtain at least one fourth bounding geometric shape corresponding to the intersection in said first motion map of columns comprising at least one non-zero element of the third histogram and of rows comprising at least one non-zero element of the fourth histogram.

11. Method according to Claim 10, or electronic device according to Claim 10, wherein said third and fourth histograms are obtained successively using at least one bounding geometric shape obtained beforehand from said first motion map.

12. Method according to Claim 11, wherein the method comprises, or electronic device according to Claim 11 wherein said at least one processor is configured to achieve, prior to dividing said first motion map, a rotation of said first motion map.

13. Computer program comprising instructions for implementing, when the program is executed by a processor of an electronic device, the method for detecting motion according to Claim 1.

14. Recording medium readable by a processor and on which is recorded a computer program comprising instructions for implementing, when the program is executed by a processor of an electronic device, the method for detecting motion according to Claim 1.

[Fig 1]

Fig 1

[Fig2]

Fig. 2

[Fig 3]

Fig 3

[Fig 4]

Fig 4

[Fig 5]

Fig 5

[Fig 6]

Fig 6

[Fig 7]

Fig 7

[Fig 8]

Fig 8

[Fig 9]

Fig 9

[Fig 10]

Fig 10

[Fig 11]

People = 3

Fig 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003044045 A1, Schoepflin
- US 6240197 B1, Christian
- US 20210133483 A1, Prabhu
- US 20150279051 A1, Kovesi